# FASCICULE DE BREVET EUROPEEN

(11) **EP 0 600 779 B1**
(45) Date de publication et mention de la délivrance du brevet: **14.05.1997**
(21) Numéro de dépôt: 93402882.0
(22) Date de dépôt: 29.11.1993
(51) Int. Cl.: B60H 1/00

(54) **Dispositif de chaffage-ventilation et/ou de climatisation de l'habitacle d'un véhicule automobile**
Vorrichtung für die Heizung, Lüftung und/oder Klimatisierung eines Fahrzeuginnenraumes
Device for heating, ventilating and/or air conditioning the interior of a motor vehicle

(30) Priorité: 02.12.1992 FR 9214523
(43) Date de publication de la demande: 08.06.1994
(73) Titulaire: VALEO CLIMATISATION, 78321 La Verrière (FR)
(72) Inventeur: Loup, Didier, F-78310 Maurepas (FR)
(74) Mandataire: Gamonal, Didier

(56) Documents cités:
- DE-A- 3 338 768
- DE-A- 3 542 626
- DE-A- 4 000 990
- DE-U- 9 214 638
- US-A- 2 860 567

## Description

L'invention concerne un dispositif de chauffage-ventilation et/ou de climatisation de l'habitacle d'un véhicule automobile.

Elle concerne plus particulièrement un dispositif du type comprenant un conduit d'air froid et un conduit d'air mixé propres à distribuer respectivement un flux d'air froid et un flux d'air mixé au travers d'une bouche d'aération commune communiquant avec l'habitacle du véhicule automobile.

Dans les dispositifs connus de ce type, l'air froid peut être soit de l'air provenant de l'extérieur de l'habitacle et éventuellement climatisé, soit de l'air recyclé provenant de l'intérieur de l'habitacle.

L'air mixé est de l'air dont la température peut être ajustée en mélangeant, en proportions réglables, un débit d'air froid et un débit d'air chaud. Ce dernier est obtenu en chauffant de l'air froid au travers d'un échangeur de chaleur qui est habituellement traversé par le liquide de refroidissement du moteur du véhicule automobile. La température de l'air mixé est donc toujours supérieure à la température de l'air froid.

Cet air mixé est envoyé ensuite vers différentes bouches d'aération pour être réparti, suivant des modes de distribution choisis, en différentes régions de l'habitacle. Ces bouches comprennent généralement au moins une bouche de dégivrage/désembuage située à la base du pare-brise, au moins une bouche communiquant avec la partie inférieure de l'habitacle pour le chauffage des pieds des passagers, des bouches latérales situées aux deux extrémités de la planche de bord, et au moins une bouche placée sur la planche de bord pour diriger de l'air vers le tronc et le visage des passagers du véhicule.

Cette dernière bouche, appelée aussi "aérateur", distribue non seulement de l'air mixé, mais aussi de l'air froid pour que les passagers du véhicule reçoivent un air à température plus basse que celle de l'air mixé envoyé derrière le pare-brise, en direction des pieds des passagers ou vers les vitres latérales.

On obtient ainsi une distribution à deux niveaux de température différents assurant un meilleur confort et une meilleure sécurité pour les passagers du véhicule, et notamment le conducteur.

On connaît, d'après le document DE-A-3 338 768, un dispositif du type précité dans lequel il est prévu un volet unique pour contrôler le flux d'air froid et le flux d'air mixé en sortie du conduit d'air froid et du conduit d'air mixé et à l'entrée d'une conduite commune aboutissant à la bouche d'aération.

L'inconvénient principal de ce dispositif connu réside dans le fait que l'on ne peut modifier le flux d'air froid indépendamment du flux d'air mixé et inversement.

Il en résulte que ce dispositif connu permet soit de distribuer simultanément de l'air froid et de l'air mixé, et cela toujours dans la même proportion, soit d'interrompre la distribution de l'air froid et de l'air mixé.

En outre, lorsque la distribution du flux d'air froid et du flux d'air mixé est interrompue, le flux d'air froid a tendance à être refoulé vers les autres bouches de distribution du véhicule qui délivrent alors un air à température plus basse que la température souhaitée.

L'invention a notamment pour but de surmonter les inconvénients précités.

L'invention propose en conséquence un dispositif de chauffage-ventilation et/ou de climatisation de l'habitacle d'un véhicule automobile, du type précité, qui comprend un premier volet propre à autoriser ou interdire le débit du flux d'air froid dans le premier conduit et un second volet propre à contrôler le débit du flux d'air mixé dans le second conduit, ainsi que des moyens de commande synchronisés agissant sur le premier volet et sur le second volet pour permettre, soit la distribution simultanée du flux d'air froid et du flux d'air mixé, soit seulement la distribution du flux d'air mixé.

Dans ces conditions, le dispositif permet deux régimes différents selon que le flux d'air froid et le flux d'air mixé sont distribués simultanément, ou que le flux d'air mixé est seul distribué dans l'habitacle. De plus, dans l'un ou l'autre de ces deux régimes, le débit du flux d'air mixé peut être ajusté à volonté.

Il est à noter que le dispositif permet aussi de distribuer de l'air froid, à condition de régler la température du flux d'air mixé en position froide.

Le dispositif de l'invention peut comporter un seul premier conduit de distribution d'air froid et un seul second conduit de distribution d'air mixé.

Toutefois, dans une forme de réalisation préférée de l'invention, le dispositif comprend un premier conduit de distribution d'air froid disposé entre deux seconds conduits de distribution d'air mixé.

Une telle forme de réalisation permet de faire aboutir le premier conduit au centre d'une bouche d'aération prévue au milieu de la planche de bord du véhicule et de faire aboutir les deux seconds conduits aux deux extrémités de cette bouche d'aération, respectivement à droite et à gauche du centre de la bouche d'aération.

Dans cette forme de réalisation préférée de l'invention, le dispositif comprend avantageusement un boîtier central comportant une partie à section en U et deux boîtiers latéraux disposés symétriquement de part et d'autre du boîtier central pour fermer le boîtier central et définir le premier conduit et pour délimiter les deux seconds conduits respectivement de part et d'autre de la partie à section en U.

Selon une autre caractéristique de l'invention, le boîtier central comporte une cloison centrale que prolonge la partie à section en U et qui est située dans le plan de symétrie des deux boîtiers latéraux.

Cette cloison centrale permet de définir, dans le dispositif, deux régions symétriques propres à envoyer de l'air mixé respectivement vers le côté droit et le côté gauche de l'habitacle.

Dans la forme de réalisation préférée mentionnée ci-dessus, le dispositif comprend avantageusement un premier volet situé dans le premier conduit et deux seconds volets situés respectivement dans les deux seconds conduits. Ces deux seconds volets peuvent être à commande simultanée ou indépendante.

Dans la forme de réalisation préférée ci-dessus, le premier conduit ainsi que les deux seconds conduits forment ensemble une conduite à section générale rectangulaire aboutissant à une bouche d'aération de forme générale rectangulaire placée sur la planche de bord du véhicule.

Selon une autre caractéristique de l'invention, le premier volet est propre à prendre soit une position d'ouverture, soit une position de fermeture du premier conduit, tandis que le second volet est propre à prendre une multiplicité de positions entre une position d'ouverture et une position de fermeture du second conduit.

Selon une autre caractéristique de l'invention, le premier volet et le second volet sont montés pivotants autour d'axes respectifs parallèles, et le premier volet comporte un bras de levier radial calé sur son axe de rotation et portant un pion d'extrémité propre à coopérer avec un chemin de came porté par un disque de commande du second volet.

De cette manière, c'est la rotation du second volet qui provoque la rotation du premier volet selon une loi définie.

Dans une variante de réalisation, le disque de commande est calé sur l'axe de rotation du second volet et le chemin de came comporte une partie en arc de cercle centrée sur l'axe de rotation du second volet et une partie radiale qui se raccorde à la partie en arc de cercle à une de ses extrémités, de telle sorte que le premier volet reste dans une position de fermeture du premier conduit tant que le pion reste dans la partie en arc de cercle et que le premier volet pivote vers une position d'ouverture lorsque le pion quitte la partie en arc de cercle pour s'engager progressivement dans la partie radiale, et inversement.

Ainsi, lorsque le premier volet est en position de fermeture, il est possible d'obtenir une multiplicité de positions angulaires du second volet et donc d'ajuster le débit d'air mixé au travers du second conduit.

Dans une autre variante, le disque de commande est une roue dentée qui engrène avec un pignon calé sur l'axe du second volet, et le chemin de came formé sur le disque de commande comprend une première partie en arc de cercle centrée sur l'axe du disque de commande et une seconde partie en arc de cercle également centrée sur l'axe du disque de commande, mais de plus grand rayon que cette première partie en arc de cercle, ainsi qu'une partie sensiblement radiale communiquant avec la première partie et la seconde partie en arc de cercle, de sorte que le premier volet se trouve en position de fermeture ou en position d'ouverture selon que le pion est respectivement dans la première partie ou dans la seconde partie en arc de cercle.

Dans l'une ou l'autre des deux variantes précitées, des moyens sont en outre prévus pour synchroniser le fonctionnement du premier et du second volet avec les autres volets de distribution du dispositif, c'est-à-dire les volets contrôlant la ou les bouches de dégivrage-désembuage du pare-brise et la ou les bouches communiquant avec la partie inférieure de l'habitacle et, le cas échéant, avec les volets contrôlant les bouches latérales.

Dans la description qui suit, faite seulement à titre d'exemple, on se réfère aux dessins annexés, sur lesquels :
- la figure 1 est une vue schématique en coupe longitudinale d'un dispositif de chauffage-ventilation et/ou de climatisation selon l'invention;
- la figure 2 est une vue en coupe selon la ligne II-II de la figure 1;
- la figure 3 est une vue en coupe selon la ligne III-III de la figure 1;
- la figure 4 est une vue en coupe selon la ligne IV-IV de la figure 1;
- la figure 5 est une vue en coupe partielle selon la ligne V-V de la figure 1;
- la figure 6 est une vue en perspective du boîtier central du dispositif de la figure 1;
- la figure 7 est une vue en coupe partielle, à échelle agrandie, selon la ligne VII-VII de la figure 6;
- la figure 8 est une vue en coupe longitudinale partielle du dispositif de l'invention intégré dans la planche de bord d'un véhicule automobile;
- la figure 9 est un détail à échelle agrandie de la figure 8;
- les figures 10A à 10E représentent schématiquement les positions respectives du premier volet et du second volet pour cinq modes de distribution différents; et
- la figure 11 représente schématiquement les moyens de commande du premier volet et du second volet dans une autre variante de réalisation.

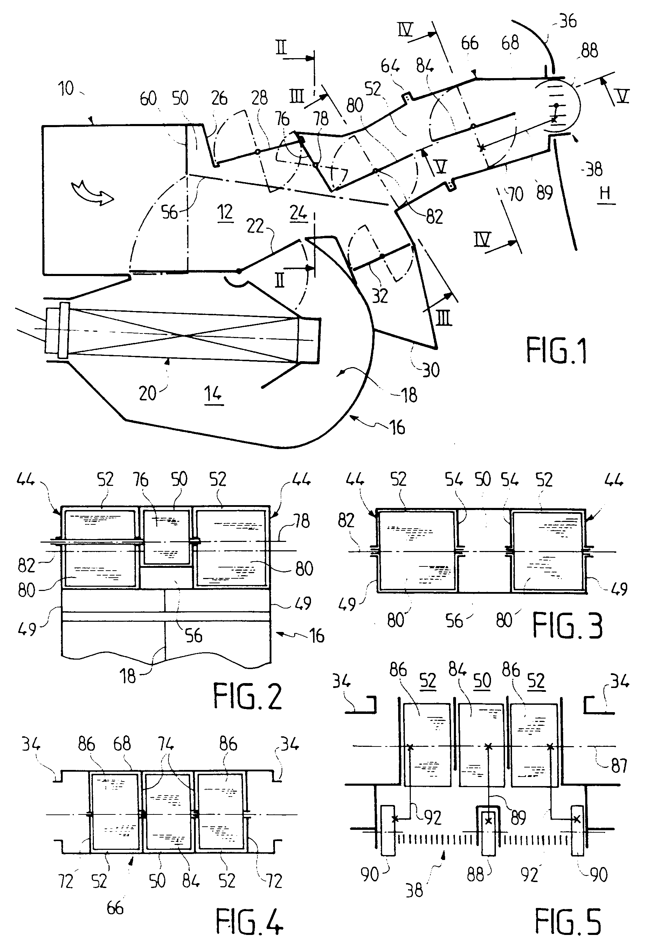

Le dispositif représenté à la figure 1 comprend un pulseur 10 propre à envoyer de l'air froid qui provient, soit de l'extérieur de l'habitacle H d'un véhicule automobile et qui peut être le cas échéant climatisé, soit de l'air recyclé provenant de l'intérieur de l'habitacle H.

L'air froid provenant du pulseur est dirigé vers une branche 12 de transmission d'air froid et vers une branche 14 de réchauffage d'air, toutes deux formées à l'intérieur d'un boîtier 16 divisé par une cloison médiane 18. Cette dernière permet ainsi de définir à l'intérieur du boîtier deux régions symétriques réservées respectivement à la partie droite et à la partie gauche de l'habitacle du véhicule. La cloison 18 divise également chacune des branches 12 et 14 en deux parties symétriques.

La branche 14 possède une configuration en U et elle comporte un échangeur de chaleur 20 alimenté par le liquide de refroidissement du moteur du véhicule. Les branches 12 et 14 ont une entrée commune alimentée par le pulseur 10 et une sortie commune contrôlée par un volet de mixage 22 pour assurer la répartition du débit d'air froid dans la branche 12 et du débit d'air chaud dans la branche 14 et obtenir ainsi, dans une zone de mixage 24, un air mixé à température réglable. A partir de la zone de mixage 24 (divisée en deux par la cloison 18), l'air mixé est envoyé vers au moins une bouche 26 de dégivrage-désembuage du pare-brise contrôlée par volet 28 et vers au moins une bouche 30 débouchant vers la partie inférieure de l'habitacle et contrôlée par un volet 32. De l'air mixé est également envoyé vers deux conduits 34 (figure 4) menant à deux bouches latérales (non représentées) situées respectivement du côté droit et du côté gauche de la planche de bord 36 du véhicule automobile. Le débit d'air mixé traversant les deux conduits 34 est contrôlé par deux volets (non représentés).

Le dispositif de l'invention comprend en outre des moyens permettant de distribuer simultanément de l'air froid et de l'air mixé au travers d'une bouche d'aération 38, encore appelée "aérateur", disposée au centre de la planche de bord 36.

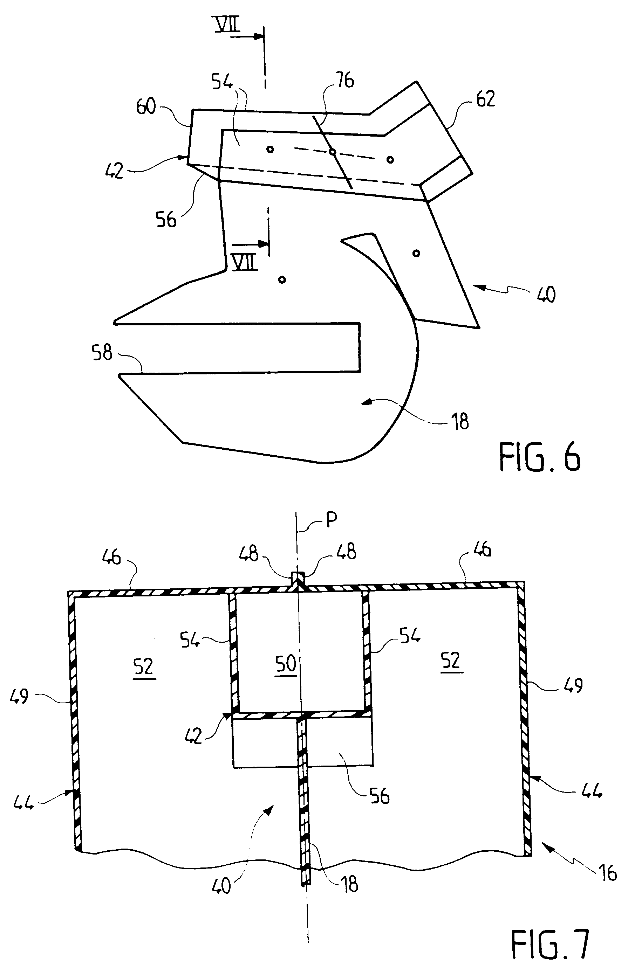

Le boîtier 16 comprend un boîtier central 40 formé par la cloison 18 et par une partie 42 à section en U ouverte vers le haut (figures 6 et 7). Cette partie 42 prolonge la cloison 18 vers le haut et s'étend symétriquement de part et d'autre du plan de symétrie P formé par la cloison. Le boîtier 16 comprend en outre deux boîtier latéraux 44 qui s'étendent symétriquement de part et d'autre du plan P. Les boîtiers latéraux 44 ont des parois supérieures respectives 46 prolongées chacune par un rebord 48 permettant leur assemblage le long du plan de symétrie P. En outre, chacun des boîtiers 44 comporte une paroi latérale 49 s'étendant à distance de la partie 42 en U du boîtier 40.

Le boîtier central 40 et les deux boîtiers latéraux 44 permettent ainsi de définir un premier conduit central 50 situé dans la partie 42 en U et deux conduits latéraux 52 compris chacun entre une paroi latérale 54 de la partie 42 en U et une paroi latérale 49 d'un boîtier 44. Le conduit 50 est délimité en partie inférieure par une paroi 56 de la partie 42, que l'on aperçoit également sur la figure 1.

Comme le montre la figure 6, la cloison 18 comporte une découpe 58 pour permettre le passage de l'échangeur de chaleur 20. La partie 42 en U délimitant le conduit 50 s'étend depuis une entrée 60 (figures 1 et 6) propre à être alimentée en air froid par le pulseur 10 jusqu'à une sortie 62 (figure 6) située à la jonction 64 du boîtier 16 et d'une conduite 66 (figure 1) aboutissant à la bouche d'aération 38.

La conduite 66 est délimitée principalement par une paroi supérieure 68, une paroi inférieure 70, deux parois latérales 72 et deux cloisons 74 qui contribuent à former le conduit central 50 et les deux conduits latéraux 52 (figure 4).

On comprendra que le boîtier 16 et la conduite 66 permettent de délimiter ainsi un conduit central 50 propre à acheminer de l'air froid depuis l'entrée 60 de ce conduit jusqu'à la bouche d'aération 38, ainsi que deux conduits 52 propres à acheminer de l'air mixé depuis la zone de mixage 24 jusqu'à la bouche d'aération 38.

Le dispositif comprend un volet 76 (figures 1, 2 et 6) monté pivotant autour d'un axe 78 s'étendant perpendiculairement au plan de symétrie P. Le volet 76 est disposé dans le conduit 50 dans une région intermédiaire comprise entre l'entrée 60 et la sortie 62 (jonction 64). Il peut soit fermer, soit ouvrir le conduit 50, pour autoriser ou non le débit du flux d'air froid délivré dans la partie centrale de la bouche d'aération 38.

Par ailleurs, le dispositif comprend deux volets 80 placés respectivement à l'entrée des deux conduits d'air mixé 52, en amont de la jonction 64. Les deux volets 80 sont montés pivotants en sur un axe commun 82 également perpendiculaire au plan de symétrie P. Les deux volets 80 permettent de régler le débit du flux d'air mixé acheminé vers les deux extrémités de la bouche d'aération 38. Le volet 76 et les deux volets 80 sont actionnés par des moyens de commande synchronisés particuliers qui seront décrits plus loin.

Le dispositif représenté à la figure 1 comprend en outre trois volets de réglage de débit : un volet central 84 et deux volets latéraux 86 placés immédiatement en amont de la bouche d'aération 38 et montés pivotants autour d'un axe commun 87 (figures 4 et 5). Le volet 84 placé dans le conduit 50 est commandé par une molette 88 par l'intermédiaire d'une biellette 89 tandis que les volets 86 placés respectivement dans les deux conduits 52 sont commandés chacun, de façon indépendante, par deux molettes 90 par l'intermédiaire d'une bielle 92.

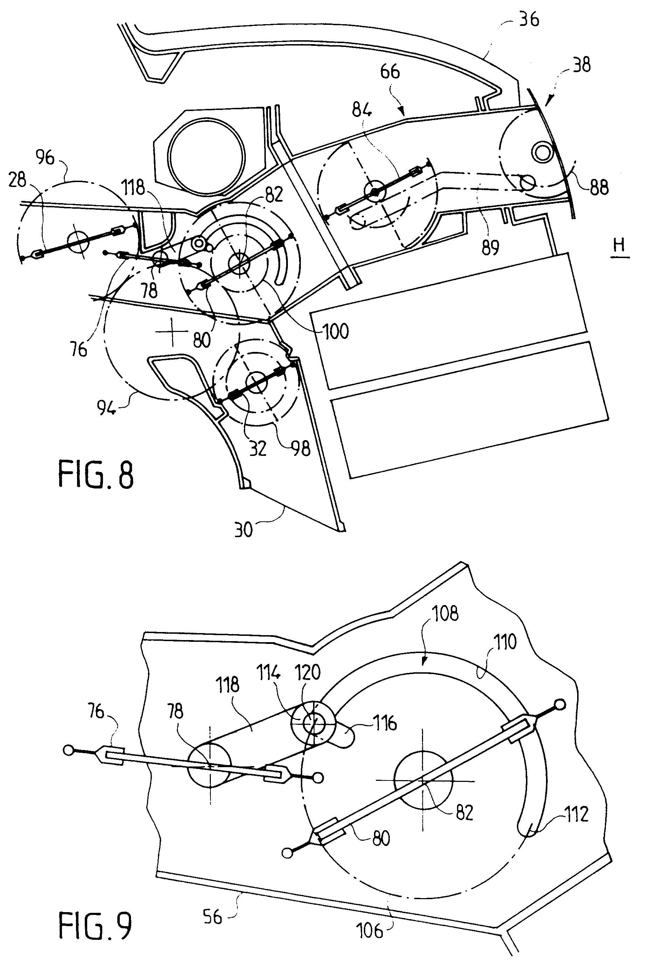

On se réfère maintenant à la figure 8 sur laquelle on a représenté également les volets 28, 32, 76, 80 et 86.

Le dispositif de l'invention comprend un pignon denté 94 qui engrène avec un pignon denté 96 solidaire en rotation du volet 28, avec un pignon denté 98 solidaire en rotation du volet 32 et avec un pignon denté 100 solidaire en rotation du volet 80. Les volets 28, 32 et 80 sont ainsi synchronisés et pivotent selon une loi définie par les rapports de transmission respectifs des pignons.

Le volet 76 est entraîné par le volet 80 par des moyens de commande qui seront décrits maintenant en référence à la figure 9.

Ces moyens de commande comprennent un disque de commande 106 calé sur l'axe de rotation 82 du volet 80 et comportant un chemin de came 108. Ce dernier comporte une partie 110 en arc de cercle centrée sur l'axe 82 et s'étendant sur environ 180° entre une extrémité 112 et une autre extrémité 114 prolongée vers l'intérieur par une partie radiale 116 qui fait partie du chemin de came.

Le volet 76 comprend un levier 118 qui s'étend radialement à partir de l'axe 78 et qui porte un tourillon 120 coopérant avec le chemin de came 108.

Il en résulte que le volet 76 reste dans une position de fermeture du conduit 50 tant que le pion 120 reste dans la partie en arc de cercle 110 du chemin de came et que le volet 76 pivote vers une position d'ouverture lorsque le pion quitte la partie en arc de cercle 110 pour s'engager progressivement dans la partie radiale 116, et inversement.

On se réfère maintenant aux figures 10A à 10E. Dans la position de la figure 10A, le pion 120 est en butée contre l'extrémité 112 du chemin de came 108, en sorte que le volet 76 est en position de fermeture du conduit 50, tandis que chacun des volets 80 est en position d'ouverture du conduit 52. Dans cette position, seul de l'air mixé est envoyé dans l'habitacle au travers de la bouche d'aération 38.

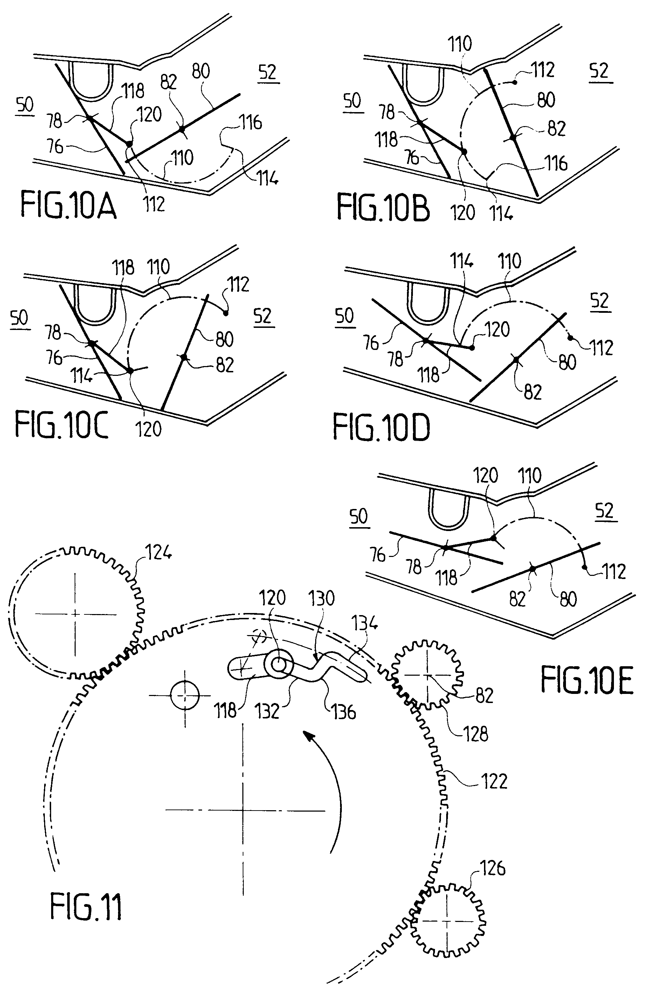

Dans la position de la figure 10B, le disque de commande 106 ainsi que le volet 80 ont pivoté d'environ 90° dans le sens horaire, si bien que le volet 80 ferme le conduit 52, le volet 76 restant toujours en position de fermeture. Il en résulte que la bouche d'aération 38 ne reçoit ni air froid ni air mixé.

Dans la position de la figure 10C, le volet a encore pivoté d'environ 45° par rapport à la position de la figure 10B, toujours dans le sens horaire. Dans cette position, le volet 80 ouvre partiellement le conduit 52. Le volet 76 reste en position fermée. Le pion 120 étant en butée contre l'extrémité 114 de la partie 110 en arc de cercle du chemin de came.

En poursuivant la rotation dans le sens anti-horaire, le pion 120 pénètre au fond de la partie radiale 116, ce qui provoque la rotation du volet 76 dans le sens anti-horaire. On arrive ainsi à la position de la figure 10D dans laquelle le volet 80 ouvre partiellement le conduit 52 et dans laquelle le volet 76 ouvre partiellement le conduit 50.

En poursuivant la rotation du volet 80 dans le sens horaire, on parvient à la position de la figure 10E dans laquelle le volet 80 ouvre complètement le conduit 52 et dans laquelle le pion 120 est revenu à l'extrémité 114 de la partie en arc de cercle 110 du chemin de came. Il en résulte que le volet 76 est en position de pleine ouverture du volet 50.

On comprendra que les moyens de commande précités permettent de distribuer au travers de la bouche d'aération 38 soit de l'air mixé seul, soit un mélange d'air mixé et d'air froid.

Si l'on désire uniquement de l'air froid, il suffit de modifier le réglage de la température de l'air mixé.

Les moyens de commande précités agissent en synchronisme avec les volets 28 et 32 selon des lois définies en fonction des modes de distribution choisis.

On se réfère maintenant à la figure 11 qui montre une autrevariante de réalisation des moyens de commande des volets. Dans cette variante, on trouve également un disque de commande constitué ici par une roue dentée 122 qui engrène avec un pignon 124 calé sur l'axe de rotation du volet 28, avec un pignon 126 calé sur l'axe de rotation du volet 32 et avec un pignon 128 calé sur l'axe de rotation 82 des volets 80. Dans la roue dentée 122 est formé un chemin de came 130 comprenant une première partie 132 en arc de cercle centrée sur l'axe de la roue dentée et une seconde partie en arc de cercle 134 également centrée sur l'axe de la roue dentée, mais de rayon plus grand que celui de la partie 132. Le chemin de came 130 comprend en outre une partie sensiblement radiale 136 communiquant avec les parties 132 et 134.

De même que dans le cas de la variante de réalisation précédente, le volet 76 (non représenté sur la figure 11) est solidaire d'un levier radial 118 portant un pion 120 s'engageant dans le chemin de came 130.

Le chemin de came 130 est conçu de telle façon que le volet 76 est en position de fermeture ou en position d'ouverture lorsque le pion 120 se trouve respectivement dans la première partie 132 ou dans la seconde partie 134 du chemin de came 130.

Bien entendu, l'invention n'est pas limitée aux formes de réalisation décrites précédemment à titre d'exemple.

## Revendications

1. Dispositif de chauffage-ventilation et/ou de climatisation de l'habitacle d'un véhicule automobile, comprenant au moins un premier conduit (50) et au moins un second conduit (52) propres à distribuer respectivement un flux d'air froid et un flux d'air mixé au travers d'une bouche d'aération commune (38) communiquant avec l'habitacle (H), caractérisé en ce qu'il comprend un premier volet (76) propre à autoriser ou interdire le débit du flux d'air froid dans le premier conduit (50) et un second volet (80) propre à contrôler le débit du flux d'air mixé dans le second conduit (52), ainsi que des moyens de commande synchronisés (106,118;122,118) agissant sur le premier volet et sur le second volet pour permettre, soit la distribution simultanée du flux d'air froid et du flux d'air mixé, soit seulement la distribution du flux d'air mixé.

2. Dispositif selon la revendication 1, caractérisé en ce qu'il comprend un premier conduit (50) de distribution d'air froid disposé entre deux seconds conduits (52) de distribution d'air mixé.

3. Dispositif selon la revendication 2, caractérisé en ce qu'il comprend un boîtier central (40) comportant une partie (42) à section en U et deux boîtiers latéraux (44) disposés symétriquement de part et d'autre du boîtier central pour fermer ce boîtier central et définir le premier conduit (50) et pour délimiter les deux seconds conduits (52) respectivement de part et d'autre de la partie (42) à section en U.

4. Dispositif selon la revendication 3, caractérisé en ce que le boîtier central (40) comporte une cloison centrale (18) que prolonge la partie (42) à section en U et qui est située dans le plan de symétrie (P) des deux boîtiers latéraux.

5. Dispositif selon l'une des revendications 2 à 4, caractérisé en ce qu'il comprend un premier volet (76) situé dans le premier conduit (50) et deux seconds volets (80) situés respectivement dans les deux seconds conduits (52).

6. Dispositif selon l'une des revendications 2 à 5, caractérisé en ce que le premier conduit (50) et les deux seconds conduits (52) forment ensemble une conduite (66) à section générale rectangulaire aboutissant à la bouche d'aération (38), cette dernière étant placée sur la planche de bord (36) du véhicule.

7. Dispositif selon l'une des revendications 1 à 6, caractérisé en ce que le premier volet (76) est propre à prendre soit une position d'ouverture, soit une position de fermeture du premier conduit (50), tandis que le second volet (80) est propre à prendre une multiplicité de positions entre une position d'ouverture et une position de fermeture du second conduit (52).

8. Dispositif selon l'une des revendications 1 à 7, caractérisé en ce que le premier volet (76) et le second volet (80) sont montés pivotants autour d'axes respectifs parallèles (78,82) et en ce que le premier volet (76) comporte un bras de levier radial (118) calé sur son axe de rotation (78) et portant un pion d'extrémité (120) coopérant avec un chemin de came (108;130) formé sur un disque de commande (106;122) du second volet (80).

9. Dispositif selon la revendication 8, caractérisé en ce que le disque de commande (106) est calé sur l'axe de rotation (82) du second volet (80) et en ce que le chemin de came (108) comporte une partie en arc de cercle (110) centrée sur l'axe de rotation du second volet et une partie radiale (116) se raccordant à une extrémité (114) de la partie en arc de cercle, de sorte que le premier volet (76) reste dans une position de fermeture du premier conduit (50) tant que le pion (120) reste dans la partie en arc de cercle (110) et que le premier volet pivote vers une position d'ouverture lorsque le pion (120) quitte la partie en arc de cercle (110) pour s'engager progressivement dans la partie radiale (116), et inversement.

10. Dispositif selon la revendication 8, caractérisé en ce que le disque de commande est une roue dentée (122) qui engrène avec un pignon (128) calé sur l'axe (82) du second volet (80) et en ce que le chemin de came (130) formé dans le disque de commande comprend une première partie en arc de cercle (132) centrée sur l'axe du disque de commande et une seconde partie en arc de cercle (134) également centrée sur l'axe du disque de commande, mais de plus grand rayon que celui de la première partie en arc de cercle, ainsi qu'une partie (136) sensiblement radiale communiquant avec la première partie et la seconde partie en arc de cercle, de sorte que le premier volet (76) est en position de fermeture ou en position d'ouverture lorsque le pion (120) est respectivement dans la première partie (132) ou la seconde partie (134) en arc de cercle.

## Claims

1. Apparatus for heating and ventilating, and/or air conditioning, the cabin of a motor vehicle, comprising at least one first duct (50) and at least one second duct (52), which are adapted to distribute, respectively, a stream of cold air and a stream of mixed air through a common aerator vent (38) communication with the cabin (H), characterised in that it includes a first flap valve (76) adapted to admit or prevent the flow of cold air into the first duct (50), together with a second flap valve (80) which is adapted to control the flow of mixed air into the second duct (52), and synchronised control means (106, 118; 122, 118) acting on the first flap valve and on the second flap valve, whereby to permit either the simultaneous distribution of the cold air stream and of the mixed air stream, or the distribution of the mixed air stream alone.

2. Apparatus according to Claim 1, characterised in that it includes a first duct (50) for distribution of cold air, which is disposed between two second ducts (52) for distribution of mixed air.

3. Apparatus according to Claim 2, characterised in that it includes a central housing (40) which includes a portion (42) having a U-shaped cross section, together with two side housings (44) which are disposed symmetrically on either side of the central housing, so as to enclose the said central housing and to define the first duct (50), and so as to delimit the two second ducts (52) respectively on either side of the portion (42) of U-shaped cross section.

4. Apparatus according to Claim 3, characterised in that the central housing (40) includes a central bulkhead (18) which extends the portion (42) of U-shaped cross section, and which lies in the plane of symmetry (P) of the two side housings.

5. Apparatus according to one of Claims 2 to 4, characterised in that it includes a first flap valve (76) arranged in the first duct (50), together with two second flap valves (80) arranged respectively in the two second ducts (52).

6. Apparatus according to one of Claims 2 to 5, characterised in that the first duct (50) and the two second ducts (52) together define a duct (66) having a generally rectangular cross section and terminating at the aerator vent (38), the latter being disposed on the fascia (36) of the vehicle.

7. Apparatus according to one of Claims 1 to 6, characterised in that the first flap valve (76) is adapted to assume either an open position or a closed position of the first duct (50), while the second flap valve (80) is adapted to assume a multiplicity of positions between an open position and a closed position of the second duct (52).

8. Apparatus according to one of Claims 1 to 7, characterised in that the first flap valve (76) and the second flap valve (80) are mounted for pivoting movement about respective parallel axes (78, 82), and in that the first flap valve (76) includes a radial lever (118) which is mounted on its axis of rotation (78) and which carries a terminal follower element (120) for cooperating with a cam track (108; 130), which is formed on a control disc (106; 122) of the second flap valve (80).

9. Apparatus according to Claim 8, characterised in that the control disc (106) is mounted on the axis of rotation (82) of the second flap valve (80), and in that the cam track (108) includes an arcuate portion (110) centred on the axis of rotation of the second flap valve, together with a radial portion (116) which is joined to one end (114) of the arcuate portion, in such a way that the first flap valve (76) remains in a position in which the first duct (50) is closed so long as the follower element (120) remains in the arcuate portion (110), and in such a way that the first flap valve pivots towards an open position when the follower element (120) leaves the arcuate portion (110) so as to engage progressively in the radial portion (116), and vice versa.

10. Apparatus according to Claim 8, characterised in that the control disc is a toothed wheel (122) which meshes with a pinion (128) mounted on the axis (82) of the second flap valve (80), and in that the cam track (130) formed in the control disc comprises an arcuate first portion (132) centred on the axis of the control disc, and an arcuate second portion (134) which is also centred on the axis of the control disc, but which has a radius greater than that of the arcuate first portion, together with a substantially radial portion (136) which communicates with the first and second arcuate portions, in such a way that the first flap valve (76) is in its closed position or its open position when the follower element (120) is in the arcuate first portion (132) or in the second portion (134), respectively.

## Patentansprüche

1. Vorrichtung für die Heizung, Lüftung und/oder Klimatisierung eines Fahrzeuginnenraums mit mindestens einem ersten Kanal (50) und mindestens einem zweiten Kanal (52), die einen Kaltluftstrom bzw. einen Mischluftstrom durch eine gemeinsame Belüftungsdüse (38) zuführen können, die mit dem Innenraum (H) in Verbindung steht, **dadurch gekennzeichnet,** daß sie eine erste Klappe (76), um den Durchfluß des Kaltluftstroms im ersten Kanal (50) freizugeben oder zu sperren, und eine zweite Klappe (80) enthält, um den Durchfluß des Mischluftstroms im zweiten Kanal (52) zu steuern, sowie synchronisierte Steuerungsmittel (106, 118; 122, 118), die auf die erste Klappe und auf die zweite Klappe einwirken, um entweder die gleichzeitige Zufuhr des Kaltluftstroms und des Mischluftstroms oder nur die Zufuhr des Mischluftstroms zu ermöglichen.

2. Vorrichtung nach Anspruch 1 , **dadurch gekennzeichnet,** daß sie einen ersten Kanal (50) für die Kaltluftzufuhr umfaßt, der zwischen zwei zweiten Kanälen (52) für die Mischluftzufuhr angeordnet ist.

3. Vorrichtung nach Anspruch 2 , **dadurch gekennzeichnet**, daß sie ein mittleres Gehäuse (40) mit einem Teil (42) mit U-förmigem Querschnitt und zwei seitliche Gehäuse (44) umfaßt, die symmetrisch beiderseits des mittleren Gehäuses angeordnet sind, um dieses mittlere Gehäuse zu verschließen und den ersten Kanal (50) zu bilden und um die beiden zweiten Kanäle (52) jeweils beiderseits des Teils (42) mit U-förmigem Querschnitt zu begrenzen.

4. Vorrichtung nach Anspruch 3 , **dadurch gekennzeichnet,** daß das mittlere Gehäuse (40) eine mittige Trennwand (18) umfaßt, die den Teil (42) mit U-förmigem Querschnitt verlängert und die in der Symmetrieebene (P) der beiden seitlichen Gehäuse angeordnet ist.

5. Vorrichtung nach einem der Ansprüche 2 bis 4, **dadurch gekennzeichnet,** daß sie eine erste Klappe (76), die im ersten Kanal (50) angeordnet ist, und zwei zweite Klappen (80) umfaßt, die jeweils in einem der beiden zweiten Kanäle (52) angeordnet sind.

6. Vorrichtung nach einem der Ansprüche 2 bis 5, **dadurch gekennzeichnet,** daß der erste Kanal (50) und die beiden zweiten Kanäle (52) zusammen eine Leitung (66) mit einem allgemein rechteckigen Querschnitt bilden, die zu der Belüftungsdüse (38) führt, die am Armaturenbrett (36) des Fahrzeugs angeordnet ist.

7. Vorrichtung nach einem der Ansprüche 1 bis 6, **dadurch gekennzeichnet,** daß die erste Klappe (76) entweder eine Öffnungsposition oder eine Schließposition zum Öffnen bzw. Schließen des ersten Kanals (50) einnehmen kann, während die zweite Klappe (80) eine Mehrzahl von Positionen zwischen einer Öffnungsposition und einer Schließposition zum Öffnen bzw. Schließen des zweiten Kanals (52) einnehmen kann.

8. Vorrichtung nach einem der Ansprüche 1 bis 7, **dadurch gekennzeichnet,** daß die erste Klappe (76) und die zweite Klappe (80) schwenkbar um jeweilige parallele Achsen (78, 82) gelagert sind und daß die erste Klappe (76) einen radialen Hebelarm (118) umfaßt, der an seiner Drehachse (78) befestigt ist und einen Abschlußstift (120) trägt, der mit einer Nockenbahn (108; 130) zusammenwirken kann, die an einer Steuerscheibe (106; 122) der zweiten Klappe (80) angebracht ist.

9. Vorrichtung nach Anspruch 8 , **dadurch gekennzeichnet,** daß die Steuerscheibe (106) an der Drehachse (82) der zweiten Klappe (80) befestigt ist und daß die Nockenbahn (108) einen auf die Drehachse der zweiten Klappe zentrierten kreisbogenförmigen Teil (110) und einen radialen Teil (116) umfaßt, der sich an ein Ende (114) des kreisbogenförmigen Teils anschließt, so daß die erste Klappe (76) in einer Schließposition zum Schließen des ersten Kanals (50) bleibt, solange der Stift (120) in dem kreisbogenförmigen Teil (110) bleibt, und daß die erste Klappe zu einer Öffnungsposition schwenkt, wenn der Stift (120) den kreisbogenförmigen Teil (110) verläßt, um fortschreitend in den radialen Teil (116) einzugreifen, und umgekehrt.

10. Vorrichtung nach Anspruch 8, **dadurch gekennzeichnet,** daß die Steuerscheibe ein Zahnrad (122) ist, das mit einem Ritzel (128) im Eingriff steht, das auf der Achse (82) der zweiten Klappe (80) befestigt ist, und daß die in der Steuerscheibe ausgebildete Nockenbahn (130) einen auf die Achse der Steuerscheibe zentrierten kreisbogenförmigen ersten Teil (132) und einen ebenfalls auf die Achse der Steuerscheibe zentrierten kreisbogenförmigen zweiten Teil (134) umfaßt, der jedoch einen größeren Radius als dieser erste kreisbogenförmige Teil aufweist, sowie einen in etwa radialen Teil (136), der mit dem ersten und dem zweiten kreisbogenförmigen Teil in Verbindung steht, so daß sich die erste Klappe (76) in Schließposition oder in Öffnungsposition befindet, je nachdem, ob der Stift (120) im ersten (132) oder im zweiten kreisbogenförmigen Teil (134) angeordnet ist.
